# EUROPEAN PATENT SPECIFICATION

(11) **EP 4 352 950 B1**
(45) Date of publication and mention of the grant of the patent: **11.02.2026**
(21) Application number: 21772904.5
(22) Date of filing: 24.08.2021
(51) Int. Cl.: H04N 7/15, G06V 40/16

(54) **USING SIMPLE MASKS FOR ONLINE EXPRESSION**
VERWENDEN EINFACHER MASKEN FÜR ONLINE-AUSDRUCK
UTILISANT DES MASQUES SIMPLES POUR EXPRESSION EN LIGNE

(30) Priority: 22.07.2021 US 202163224457 P
(43) Date of publication of application: 17.04.2024
(73) Proprietor: GOOGLE LLC, Mountain View CA 94043 (US)
(72) Inventor: MARCHANT, Robert, Mountain View, CA 94043 (US); BUTLER, Tríona Éidín, Mountain View, CA 94043 (US); HOLLAND, Henry John, Mountain View, CA 94043 (US); JONES, David Matthew, Mountain View, CA 94043 (US); PAWLE, Benjamin Guy Alexander, Mountain View, CA 94043 (US); COLVILLE, Michael, Mountain View, CA 94043 (US); RICKERBY, George Joseph, Mountain View, CA 94043 (US)
(74) Representative: Derry, Paul Stefan
(86) International application number: PCT/US2021/047326
(87) International publication number: WO 2023/003575

(56) References cited:
- US-A1- 2015 070 351
- US-A1- 2019 130 629
- US-A1- 2020 358 983

## Description

### BACKGROUND

Real-time interactive communication can take on many forms. Videoconference or other applications that employ user imagery can help provide contextual information about the participants, which can promote robust and informative communication. However, video imagery of participants can suffer from bandwidth constraints, which may be due to a poor local connection (e.g., WiFi) or issues with the communication backhaul. Regardless of the cause, bandwidth-related issues can adversely impact the users' interaction. In addition, providing photo-realistic representations of participants or the location they are communicating from can introduce other concerns.

While certain concerns relating to user-specific information may be addressed by using a static avatar, blurring the background or otherwise utilizing a selected scene as a background view, this does not alleviate problems with video of the users themselves. Approaches other than real-time video of a user may include memoji that can mimic certain facial expressions, or face filters that utilize augmented reality (AR) virtual objects to alter a person's visual appearance. However, these approaches can fail to provide useful real-time contextual information regarding a participant, including how they are interacting with other users or the application that brings the users together. They may also not be suitable for many types of interaction, especially for professional or business settings such as board meetings, client pitches, icebreakers, tele-heath visits or the like.

US 2019/0130629 A1 discloses a method for generating and causing display of a communication interface that facilitates the sharing of emotions through the creation of 3D avatars. Image data depicting a face of a user is captured at a first client device, a mesh representation of the face is generated and the presentation of an avatar associated with the user is animated based on the mesh representation.

US 2020/0358983 A1 discloses a method for video conferencing. At a first device associated with a first user, a video feed is captured, facial landmarks are detected in the video feed and are transmitted as a feed of facial landmarks to a second device. A face model representing facial characteristics of the first user is accessed, the feed of facial landmarks and the face model are transformed into a feed of synthetic face images and rendered for display to a second user.

### BRIEF SUMMARY

The technology relates to methods and systems for enhanced co-presence of interactive media participants (e.g., for web apps and other applications or programs) without relying on high quality video or other photo-realistic representations of the participants. A low-resolution puppet, simulacrum or other graphical representation of a participant (a "user mask") provides real-time dynamic co-presence, which can be employed in a wide variety of video-focused, textual-focused or other types of applications. This can include videoconferencing, shared experience and gaming scenarios, document sharing and other collaborative tools, texting or chat applications, etc.

The matter for protection is defined by the claims.

### BRIEF DESCRIPTION OF THE DRAWINGS

Fig. 1 illustrates an example simple mask scenario in accordance with aspects of the technology.
Figs. 2A-B illustrate a user mask approach in accordance with aspects of the technology.
Fig. 3 illustrates a user mask creation process in accordance with aspects of the technology.
Figs. 4A-B illustrate a system for use with aspects of the technology.
Figs. 5A-C illustrate different scenarios with user masks in accordance with aspects of the technology.
Figs. 6A-C illustrates a user mask presentation scenario in accordance with aspects of the technology.
Figs. 7A-B illustrate additional examples in accordance with aspects of the technology.
Fig. 8 illustrates a method in accordance with aspects of the technology.

### DETAILED DESCRIPTION

### Overview

According to the technology, a face detection process is able to capture a maximum amount of facial expression with minimum detail in order to construct a "mask" of the user. Here, a facial mesh is generated at a first user device in which the facial mesh includes a minimal amount of information per frame. The facial mesh information, including key points of the face, are provided to one or more other user devices, so that the graphical representation of the participant at the first device can be rendered in a shared app at the other device(s).

By way of example, the facial mesh information may be updated for each frame of video captured at the first user device. The information from each frame may be, e.g., on the order of 50-150 2D points at one byte per dimension, so between 100-200 bytes per frame (uncompressed). The rendered graphical representation thus illustrates real-time interaction by the participant at the first device, conveying facial expressions, overall appearance and pose with a minimal amount of transmitted information. Should quality issues degrade a video feed, the graphical representation (including the facial expressions) of the participant can remain unaffected due to its very low bandwidth requirements.

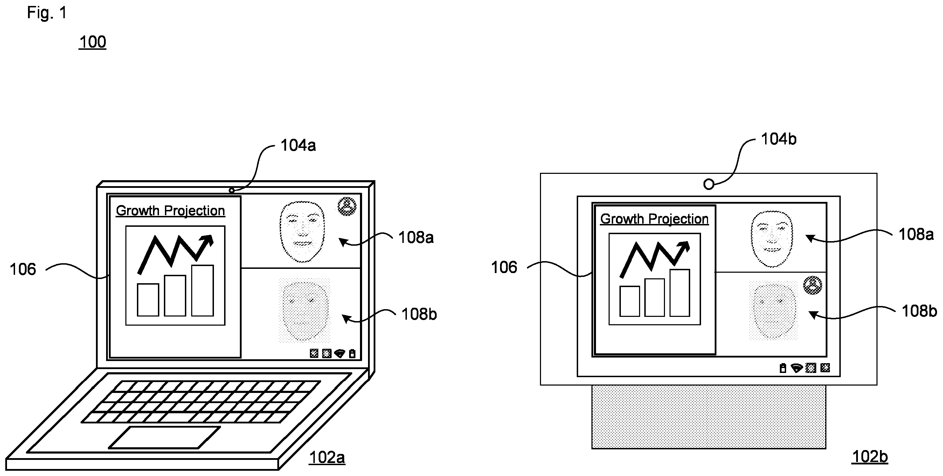

Fig. 1 illustrates an example scenario 100 employing simple masks in accordance with aspects of the technology. As shown, there is a pair of client computing devices 102a and 102b, each associated with a different user. Each client device has at least one user-facing camera 104a or 104b. In this example, the first client computing device 102a may be a laptop, while the second client computing device may be a home-related device such as a smart home assistant. However, the client computing devices may be other types of computing devices such as a desktop computer, a tablet PC, a netbook, a mobile phone, a personal digital assistant, a smartwatch or other wearable computing device, etc.

In other configurations, the user-facing camera may be separate from the computing device (e.g., a portable webcam or mobile phone on the user's desk). In this case, the device with the camera could be paired to the computing device or configured to run a co-presence application. By way of example, a user may run the co-presence application on a desktop computing device with no camera/microphone capability, but shares their screen to show a presentation. On a secondary device, the same user would also run a version of the application, where a camera is used to capture the key facial points and audio information via a microphone.

While only two client computing devices 102a,b are shown, the technology can support three or more users and their respective devices. In this example, each client device has a common app or other program 106, such as collaborative spreadsheet. The app may be a program that is executed locally by a client device, or it may be managed remotely such as with a cloud-based app. In this example, a first graphical representation 108a (e.g., a puppet or other mask representation) is associated with a user of the first client computing device 102a, and a second graphical representation 108b is associated with a user of the second client computing device 102b.

In one scenario, the graphical representations 108a,b are rendered locally at the respective computing devices based on facial mesh information derived from imagery captured by the cameras 104a,b. Thus, instead of transmitting a high-quality video stream or other photo-realistic representation of the user of the first client computing device that may require kilobytes of data per frame, the facial mesh information is provided for rendering in the app 106. As discussed further below, the rendered graphical representation(s) enable real-time dynamic co-presence of the app's collaborators. This can include changes to facial expressions, syncing with audio, reorienting the position of the user representation to indicate the user's focus in the app, moving the location of the user representation within the app, e.g., to show where the person is working within the app or to delineate a presenter from other participants, etc.

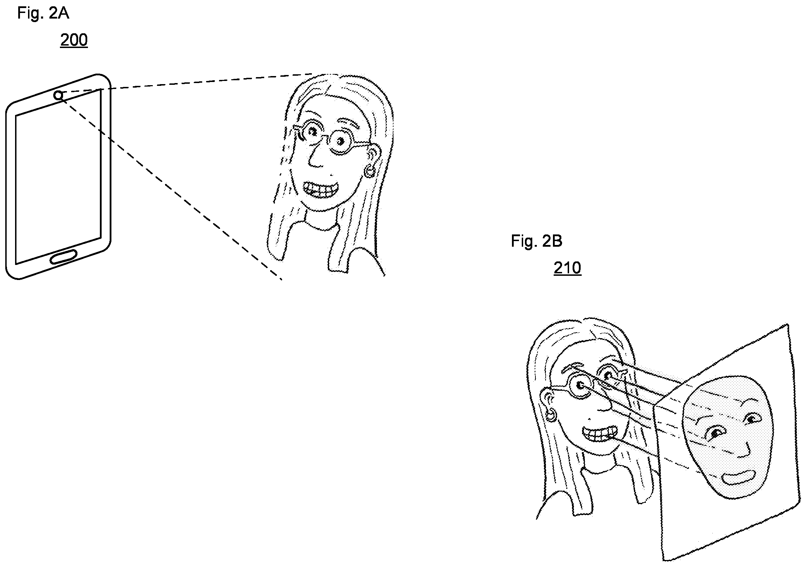

As shown in view 200 of Fig. 2A, when a user is looking towards the display of the client device, the camera obtains imagery of the person. Upon detecting the presence of the user, a face mesh is generated. Data points obtained from the face mesh are then used to construct a mask of the user, as shown in view 210 of Fig. 2B. This enables the system to capture maximum facial expression with minimum detail. In particular, the user mask provides the expressivity and animation of video, but free from the visual noise associated with video (e.g., due to compression artifacts, dropped packets, etc.). This, in turn, permits the user masks to be easily overlaid or otherwise incorporated into a user interface (UI) to create new collaborative experiences.

### User Mask Creation

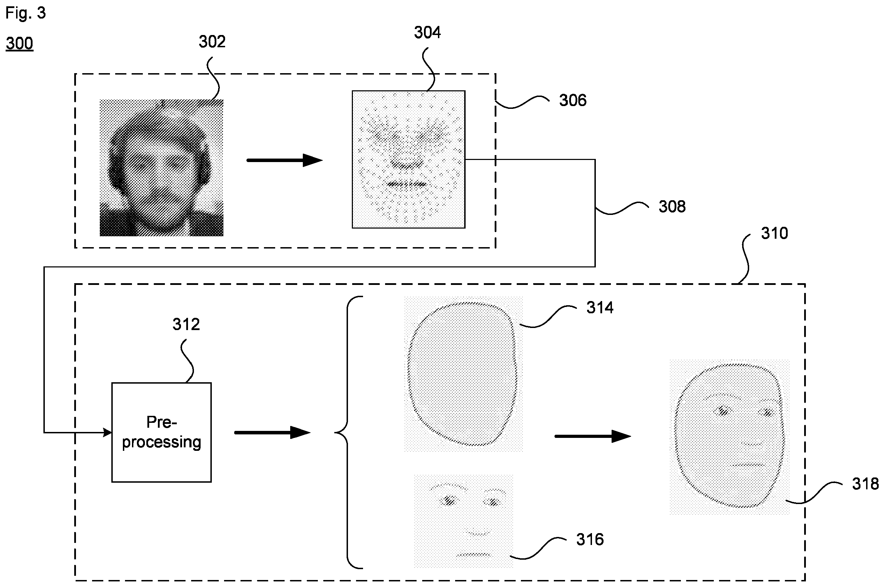

Fig. 3 illustrates an example process 300 for creating a user mask. At block 302, an image is captured by the camera of the client computing device. From this, at block 304 a face mesh is obtained. The face mesh may be generated in the following manner. In one scenario, a machine learning model is used to infer three-dimensional surface geometry of the person's face. Here, a face detection model may be employed in conjunction with a face landmark model, using only a single camera for input without a depth sensor. The face detection model is able to operate on the full image received from the camera in order to determine face location information. For instance, the face detection model may generate face boundary information (e.g., rectangles) and selected landmarks such as the centers of the eyes, ear features such as tragions, the tip of the nose, etc.

The face landmark model relies on these landmarks to predict an approximate surface geometry (e.g., via regression). In particular, the landmarks are references for aligning the face to a selected position, for example with the eye centers along a horizontal axis of a facial rectangle. This allows for cropping of the image to omit non-facial elements. Cropping information can be generated based on face landmarks identified in a preceding frame. Once cropped (and optionally resized), the data is input to a mesh prediction neural network, which generates a vector of landmark coordinates in three dimensions. This vector can then be mapped back to the coordinate system of the captured image from the camera. The result is a mesh that acts as a virtual representation of the user's face. The mesh data may include the vertices with selected facial regions and the center of the user's head optionally identified.

In one scenario, both image capture and face mesh generation occur in real time at the same client device (as indicated by dashed line 306). As indicated by arrow 308, the mesh data can be transmitted to the client devices of the other participants and/or used by the client device where the imagery was captured, to render the user mask. Alternatively, for cloud-based or centrally managed apps, the user mask can be rendered remotely for presentation in an app UI.

According to one aspect, the face mesh model generates landmark information, which include labelled points that constitute a specific feature of a face (e.g., the left eyebrow). This data is sent as part of the mesh of points. The coordinates of key points of the face mesh are sent so that the graphical mask can be rendered at the other end. For instance, each mesh may use approximately 50-100 two-dimensional points at 1 byte per dimension, or on the order of 100-200 bytes per frame, uncompressed. This would be several orders of magnitude smaller than for a typical video call, which may operate at approximately 300 Kb/s. At 30 frames per second, that is on the order of 10,000 bytes per frame. According to one example, the model may generate a maximum of 400-600 points; however, a subset of fewer than the maximum number of points can be transmitted to save bandwidth, with a corresponding reduction in fidelity of the user mask generated at the receiving end. By way of example, the subset may be 90%, 80%, 70%, 60%, 50% or fewer of the maximum number of points.

In addition to sending the set (or subset) of the mesh of points, inference data from other models could also be sent. For instance, a model that detected sentiment based on facial expressions could be used to provide contextual information. In one implementation, a multimodal model could be used that detects all of the information that will be associated with the mask to be generated.

As shown by dashed block 310, mask generation may be performed in the following manner. Upon receipt of the key point coordinates of the face mesh, this information may be preprocessed as shown at block 312. By way of example, the pre-processing may include rotation of the key point coordinates, such as to cause the generated mask to change orientation to indicate where the user's focus is. For instance, if the user turns their head or looks towards a particular place on the display screen, this can be reflected by rotation. In conjunction with head rotation, a mouse, cursor, touchscreen and/or pointer could be used as an additional signal for focus. Pre-processing can alternatively or additionally include scaling. Other pre- or post-processing can include the application of data from other models. By way of example, if another model detected that the person had a particular emotion e.g., was angry (or happy, sad, etc.), the face mesh point cloud could be adjusted to make the mask appear 'angrier' (or happier or sadder, etc.). In addition, the color and/or texture of the how the hull and features are rendered could also be altered according to the information from the other model(s).

After any pre-processing, the system generates a face "hull" as shown at block 314 and facial features as shown at block 316. In particular, at block 314 the hull or outer perimeter of the mask is drawn around the mesh points. The hull is generated by taking all the points of the facial features, creating a line that encircles all of the points, and performing a hull concavity operation to draw the encircling line inward, for instance until the line circumscribes the outermost points with a minimum of empty space between each point and the line. In one scenario, one or more of the mesh points may be discarded or ignored in order to create a "smooth" hull that has a generally oval or rounded appearance. At block 316, the facial features are drawn using lines and polygons between selected mesh points. These operations may be done in parallel or sequentially. Then, at block 318, the hull and facial features are assembled into the user mask. The overall process can be repeated for subsequent image frames captured by the camera.

Rather than computing and drawing the hull, the system could also triangulate the mesh and render those triangles using a 3D renderer. The hull could also be drawn more approximately, by drawing a predefined shape e.g., a circle, oval or other shape behind the mask. Another approach altogether would be to use the facial features to drive a 3D model puppet. In this case, some 3D points on a puppet model would be connected to the face mesh features, and the motion of the model would be driven by the motion of the mesh. By way of example, there could be a system linking points on the face mesh to parts of a 3D face model, so that motion in the face mesh is reflected in the 3D model. Thus, one could draw a high-resolution 3D face, with the location, rotation, and positioning of features like eyes, eyebrows and mouth driven by the face mesh data.

### Example System

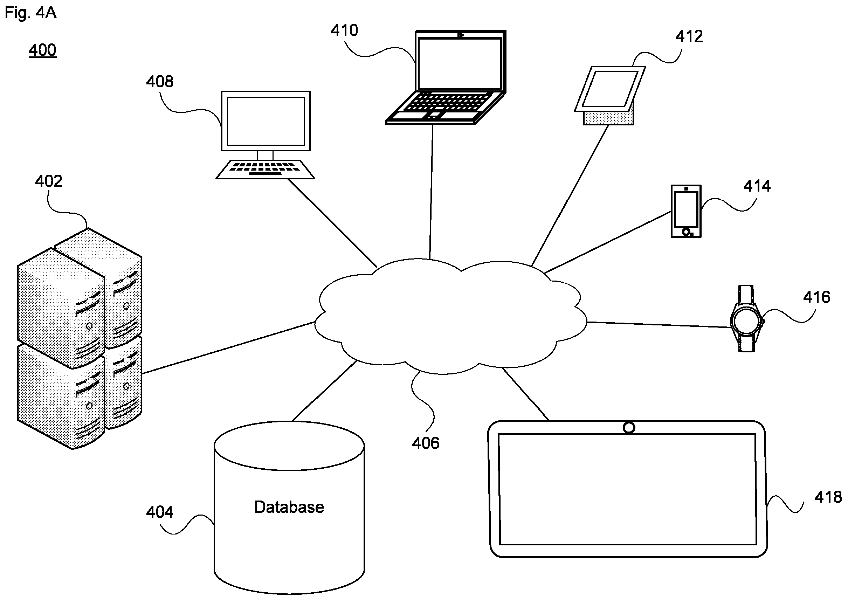

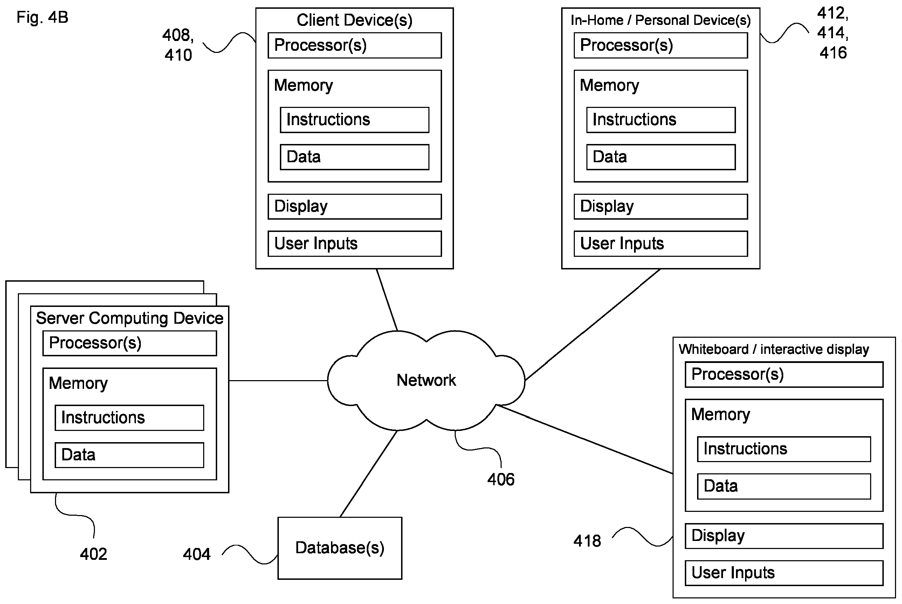

The user masks that are generated can be used in a wide variety of applications and scenarios, as discussed in detail below. How the user masks are generated and shared can depend on how the participants communicate with one another. One example computing architecture is shown in Figs. 4A and 4B. In particular, Figs.4A and 4B are pictorial and functional diagrams, respectively, of an example system 400 that includes a plurality of computing devices and databases connected via a network. For instance, computing device(s) 402 may be a cloud-based server system that provides or otherwise supports one or more apps, games or other programs. Database 404 may store app/game data, user profile information, or other information with which the user masks may be employed. The server system may access the databases via network 406. Client devices may include one or more of a desktop computer 408, a laptop or tablet PC 410 and in-home devices such as smart display 412. Other client devices may include a personal communication device such as a mobile phone or PDA 414 or a wearable device 416 such as a smart watch, etc. Another example client device is a large screen display or interactive whiteboard 418, such as might be used in a classroom, conference room, auditorium or other collaborative gathering space.

In one example, computing device 402 may include one or more server computing devices having a plurality of computing devices, e.g., a load balanced server farm or cloud computing system, that exchange information with different nodes of a network for the purpose of receiving, processing and transmitting the data to and from other computing devices. For instance, computing device 402 may include one or more server computing devices that are capable of communicating with any of the computing devices 408-418 via the network 406. This may be done as part of hosting one or more collaborative apps (e.g., a videoconferencing program, an interactive spreadsheet app or a multiplayer game) or services (e.g., a movie streaming service or interactive game show where viewers can provide comments or other feedback).

As shown in Fig. 4B, each of the computing devices 402 and 408-418 may include one or more processors, memory, data and instructions. The memory stores information accessible by the one or more processors, including instructions and data that may be executed or otherwise used by the processor(s). The memory may be of any type capable of storing information accessible by the processor(s), including a computing device-readable medium. The memory is a non-transitory medium such as a hard-drive, memory card, optical disk, solid-state, etc. Systems may include different combinations of the foregoing, whereby different portions of the instructions and data are stored on different types of media. The instructions may be any set of instructions to be executed directly (such as machine code) or indirectly (such as scripts) by the processor(s). For example, the instructions may be stored as computing device code on the computing device-readable medium. In that regard, the terms "instructions", "modules" and "programs" may be used interchangeably herein. The instructions may be stored in object code format for direct processing by the processor, or in any other computing device language including scripts or collections of independent source code modules that are interpreted on demand or compiled in advance.

The processors may be any conventional processors, such as commercially available CPUs. Alternatively, each processor may be a dedicated device such as an ASIC, graphics processing unit (GPU), tensor processing unit (TPU) or other hardware-based processor. Although Fig. 4B functionally illustrates the processors, memory, and other elements of a given computing device as being within the same block, such devices may actually include multiple processors, computing devices, or memories that may or may not be stored within the same physical housing. Similarly, the memory may be a hard drive or other storage media located in a housing different from that of the processor(s), for instance in a cloud computing system of server 402. Accordingly, references to a processor or computing device will be understood to include references to a collection of processors or computing devices or memories that may or may not operate in parallel.

The computing devices may include all of the components normally used in connection with a computing device such as the processor and memory described above as well as a user interface subsystem for receiving input from a user and presenting information to the user (e.g., text, imagery and/or other graphical elements). The user interface subsystem may include one or more user inputs (e.g., at least one front (user) facing camera, a mouse, keyboard, touch screen and/or microphone) and one or more display devices that is operable to display information (e.g., text, imagery and/or other graphical elements). Other output devices, such as speaker(s) may also provide information to users.

The user-related computing devices (e.g., 408-418) may communicate with a back-end computing system (e.g., server 402) via one or more networks, such as network 406. The user-related computing devices may also communicate with one another without also communicating with a back-end computing system. The network 406, and intervening nodes, may include various configurations and protocols including short range communication protocols such as Bluetooth^{™}, Bluetooth LE^{™}, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

### Exemplary Applications and Scenarios

How the user masks of participants are displayed may depend on the type of app, game or other program, what a given participant is doing at a particular point in time, the number of participants, the size of the display screen and/or other factors. This is explored in the following example scenarios.

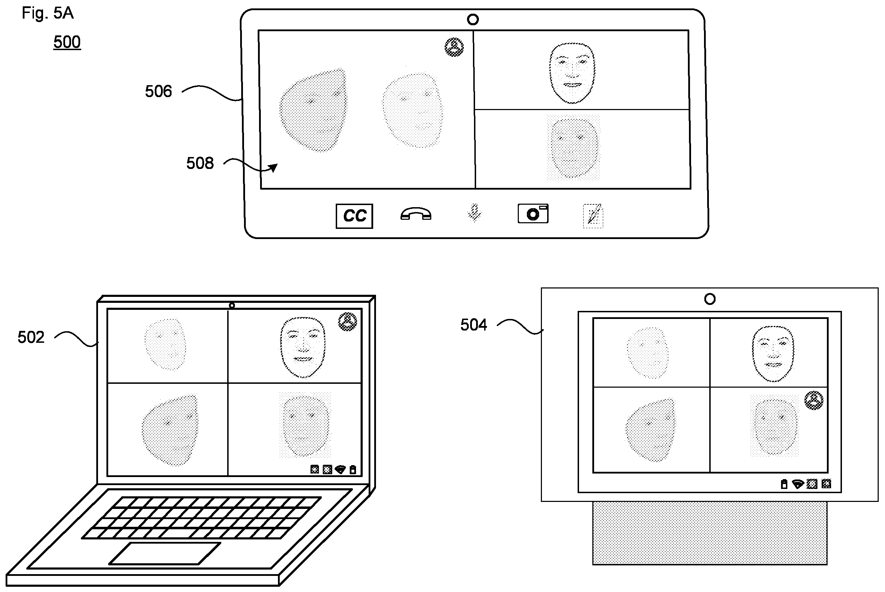

Fig. 5A illustrates a videoconference-type scenario 500, in which different participants either have their own client computing devices 502 and 504, or are sharing a device such as an interactive whiteboard 506. While users may conventionally interact with full video imagery from their devices' video cameras, in this scenario one or more of the participants may have bandwidth constraints (e.g., poor WiFi connectivity or spotty cellular coverage). Or a participant may not want to have themself or their personal workspace appear on camera. As shown on the displays of devices 502 and 504, each user mask may be displayed in a specific panel or section of the UI. Alternatively, as shown on the display of whiteboard 506, the participants that are in the same room as the whiteboard may be grouped together in the same panel or section 508 of the UI. By way of example, the UI could vary the thickness or color of the mask hull to indicate that a particular person is speaking (or taking some action). Alternatively or additionally, more mesh points could be used for a person that is speaking than a person in the audience. This could be done by reducing the mesh points transmitted for passive participants, e.g., to reduce bandwidth, and/or to transmit more mesh points for an active contributor.

In another scenario, participants who are not "active" (e.g., for more than a threshold amount of time such as 2-5 minutes, or more or less) could have their masks generated locally by the receiving computer (for example without transmitting any face mesh data), to stop them from "going static". Here, the masks would effectively be switched to a "self-driving" mode when they don't have a lot of input from their associated user. In a further scenario, the "self-driving" mode may be activated when a participant's connection is poor, and little to no face data has been received for some threshold period of time (e.g., on the order of 1-5 seconds or more). Here, the participant can continue to have their attention communicated even when the connection is unreliable.

Furthermore, the user masks could be augmented with symbols, emoji, etc. to add contextual information such as status, activity or the like. Here, the mesh could be distorted or have transformations applied to it to convey information, such as that the user has looked away from the camera, so there is not a clear mesh to transmit. In this case, the recipient computer(s) could shrink the displayed user mask of the other participant to indicate that state.

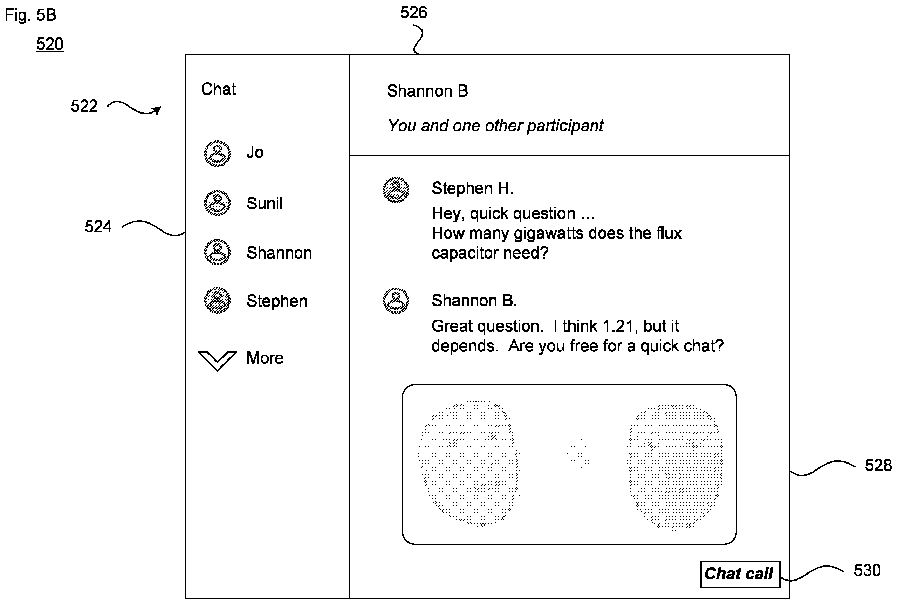

Fig. 5B illustrates a texting-type scenario 520, in which the participants are able to chat via textual input. Here, user interface 522 includes a first pane 524 that indicates different users that are in a group or are otherwise able to chat with one another. In this example, a second pane 526 is shown along the top of the UI, indicating the user's name and how many other people are actively in the chat. And a third pane 528 presents the textual communication between the participants. As shown, the participants are able to easily jump into a more robust interaction with user masks providing contextual cues that are not available when just using text. Here, any participant can select the Chat Call icon 530 to initiate visual communication via user masks. In this scenario, audio may be optionally provided to complement the user masks. This approach can enhance the communication without the formality and direct focus of a video call. It enables participants to chat as normal while reading social cues that would otherwise be missing from the text communication.

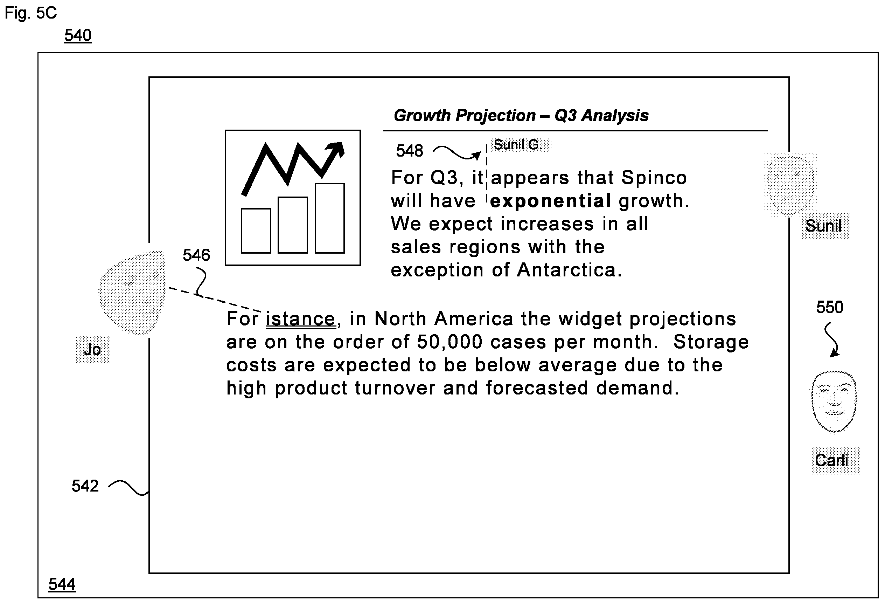

Fig. 5C illustrates a collaborative document editing scenario 540, in which a document 542 in UI 544 is being shared among different users (here, Jo, Sunil and Carli). While the document 542 is shown as a report, it may be any type of document (e.g., a spreadsheet, presentation, etc.). In this type of scenario, the masks can be arranged in the UI to create awareness of a participant's state of mind, mood and/or area of concentration. This can promote better riffing and enable polite interruptions in a bandwidth-efficient manner. Collaborators are able to focus on the content of the document, and not on the other people per se.

By way of example, the mask locations show where different people are looking in the document, and a tilt of the mask can show where they are typing or selecting content. For instance, as shown by dotted line 546, Jo's user mask is tilted to face towards the word "istance", which is a typographical error. And Sunil's mask is facing towards the bolded text "exponential" as they type that word into the document as shown by dashed line 548. Here the cursor may be augmented by the user mask, such as to provide more context to the other collaborators as to why the document is being modified. Or the cursor can act as an anchoring signal for the mask, so that rotation or other movement of the mask is made in relation to the position of the cursor. Also shown in this example is Carli's mask. Here, when Carli begins to speak with the other participants, mask 550 turns face-on (not angled toward the textual content) so that Carli's facial expression can be more clearly illustrated along with any accompanying audio.

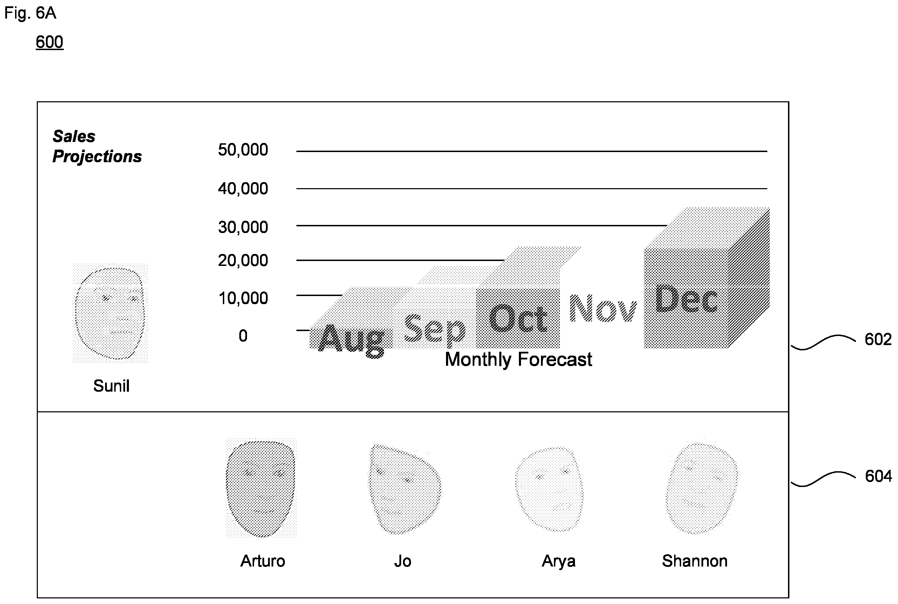

Figs. 6A-C illustrate another scenario 600, in which audience reaction can help shape a remote presentation. In this example, Sunil is giving a presentation about sales projections. Here, the user masks of other participants can provide visual feedback to the presenter, allowing Sunil to tailor the presentation to the audience. This is done without distracting video feeds from the audience (or Sunil) competing with the content that is the focus of the presentation. As seen in Fig. 6A, the positions of the user masks around the UI imply social cues. For instance, Sunil's mask is adjacent to the slide of the presentation that is currently being displayed (e.g., along a first pane 602 of the UI), which indicates that Sunil is the presenter, while the other masks are positioned separately in a different pane 604 of the UI (e.g., an "auditorium" section) to indicate that the other participants are the audience.

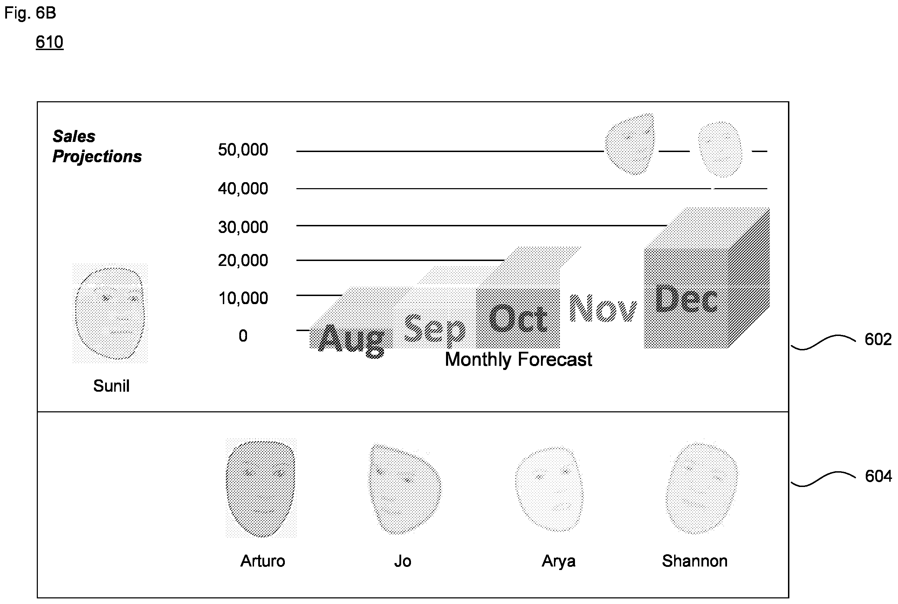

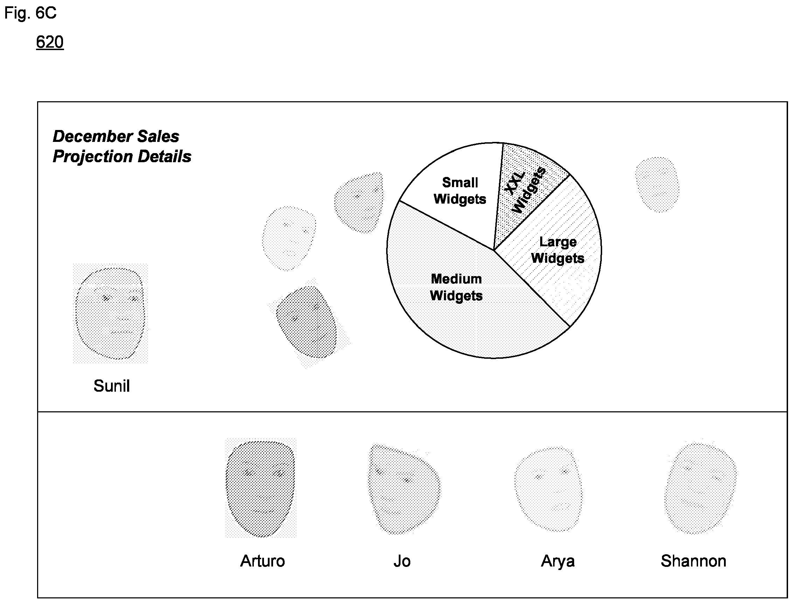

As seen in Fig. 6B, when user attention from audience members focuses on a particular part of the slide, their user mask moves toward that part of the slide. In view 610 of Fig. 6B, assume that Jo and Shannon are focused on the December monthly forecast portion of the slide. Here, not only can Sunil see that Jo and Shannon are looking at the December portion, but can also see their real-time facial expressions. Based on this, the presenter can quickly jump to the relevant slide that discusses that area of interest in more detail. For instance, as shown in view 620 of Fig. 6C, a pie chart slide shows the relative sales projections for widgets of various sizes. As seen here, while Sunil is still presenting, it can be easily discerned that the other participants are focused on specific portions of the chart, including their expressions. Thus, the presenter is able to quickly and effectively tailor the presentation based on visual cues from other participants. It will be appreciated that, particularly in situations where the audience has many members, the bandwidth savings associated with presenting an array of user masks in comparison with an array of video feeds for the members, are significant. There is also an efficiency in terms of the user of the screen real-estate; useful information for each audience member, via a spatially efficient user mask, can be readily conveyed to the presenter to guide their interaction with the presentation application.

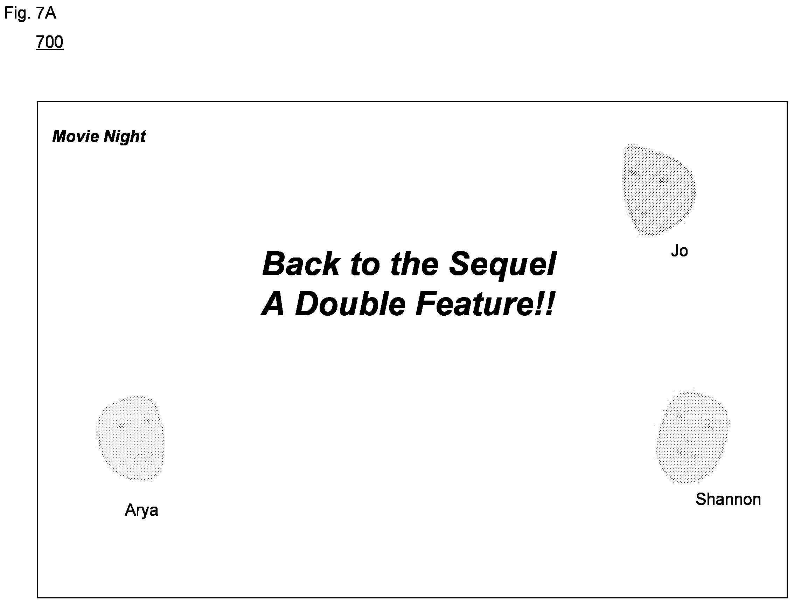

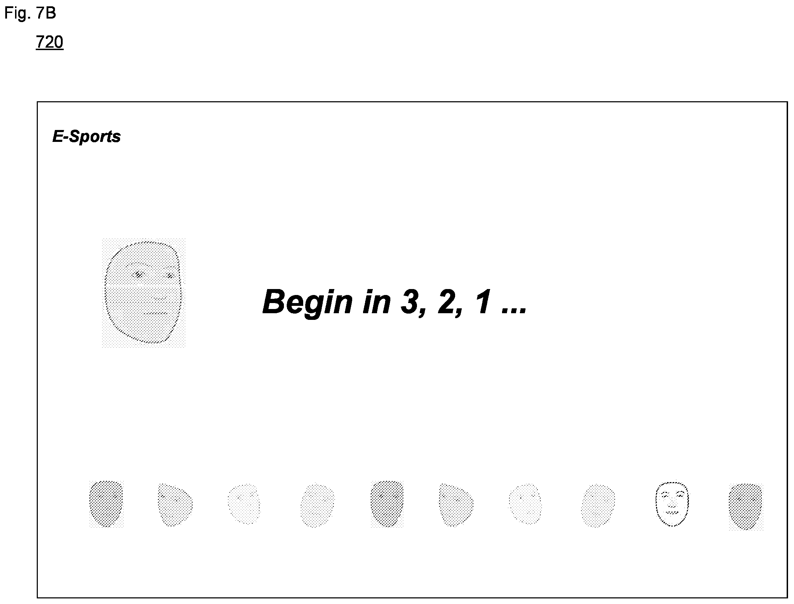

View 700 of Fig. 7A shows another example application for a remote movie night with friends. Here, the viewers masks are overlaid in the display screen to provide a shared experience. For instance, the friends would each stream the same movie (or tv show, sporting event, etc.) and would be able to see everyone else's reactions via their masks' expressions. Similarly, view 710 of Fig. 7B shows an example e-sports scenario where friends or other gamers can be involved in a player's game. In this case, the player may have a heads-up display with their friends' masks shown along a perimeter of the screen. This allows the player to see their in-game reactions to how he/she is performing.

These are just a few examples of how user masks may be employed to enrich the interaction of users in a shared space, without the distraction or other downsides to employing full motion video of each person. Of course, this would not prevent some users from having a video of them presented to other participants. However, in one scenario should there be a disruption in a WiFi signal or bandwidth issue with the connection, then the system could gracefully fall back to presenting the user mask instead of full motion video. For instance, should a problem with the video be detected such as falling below a threshold quality level, then the face mesh for a user can be automatically generated by the client computing device. Alternatively, the participant may elect to switch from full motion video to the user mask, for instance by selecting a "mask" button in the app, game or other program being used. And as noted above with regard to Fig. 4B, a participant may enhance a text-based app by introducing user masks (with or without accompanying audio). In one scenario, the switch can be instantaneous (not perceptible to the participant). This switch could be accompanied by a visual transition, such as a fade from the full motion video of the person's face to the user mask. Here, the tracking model could continuously run so that there is always a face mesh ready to use.

Depending on the number of participants or other factors, it may be desirable to personalize or otherwise choose how a person's mask will be displayed. For instance, a person may be able to customize the appearance of their mask. By way of example, tunable features may include adjusting the refresh (or frame) rate, the mask color(s), resolution, size, line thickness or the like. Such modifications may be associated with a particular app (e.g., one person may have different masks for different apps), with a particular device or physical location (e.g., different appearance depending on whether the user is working from home on their laptop or mobile phone, is at work at their desk or in a conference room, etc.)

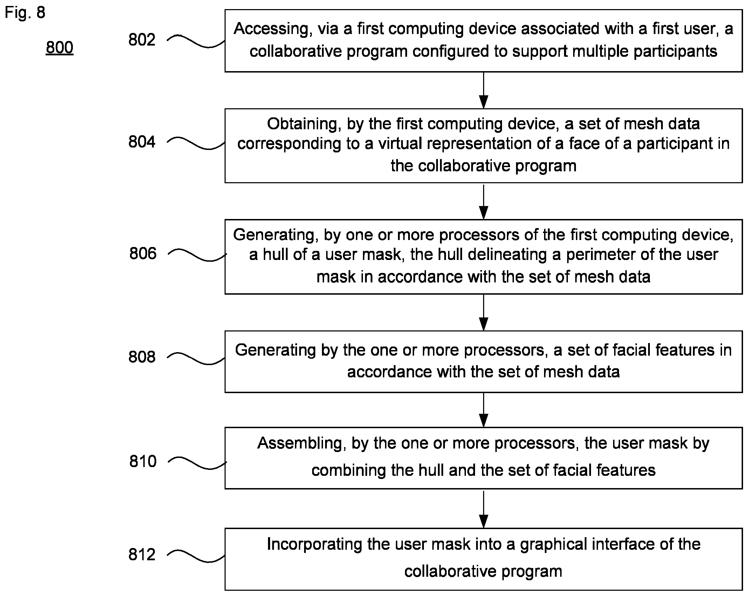

Fig. 8 illustrates a method 800 in accordance with aspects of the technology. At block 802, the method includes accessing, via a first computing device associated with a first user, a collaborative program configured to support multiple participants. At block 804, the method includes obtaining, by the first computing device, a set of mesh data corresponding to a virtual representation of a face of a participant in the collaborative program. At block 806, the method includes generating, by one or more processors of the first computing device, a hull of a user mask, the hull delineating a perimeter of the user mask in accordance with the set of mesh data. At block 808, the method includes generating by the one or more processors, a set of facial features in accordance with the set of mesh data. At block 810, the method includes assembling, by the one or more processors, the user mask by combining the hull and the set of facial features. At block 812, the method includes incorporating the user mask into a graphical interface of the collaborative program.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the appended claims.

The user mask technology can be easily employed in all manner of apps, games and other programs, providing rich contextual information to other participants in real-time using mesh data derived from a user's face. This is done at a small fraction of the bandwidth that would be required from conventional full video imagery. By way of example, while aspects of the technology enable collaboration for documents and other text-based applications (e.g., chatting), the technology is applicable in many other contexts. For instance, friends may share a common activity such as watching a movie or gaming. Visual cues from a virtual audience can help the presented focus their attention on particular details or rapidly change slides to more relevant content.

## Claims

1. A method, comprising:
accessing, via a first client computing device (102a) associated with a first user, a collaborative program configured to support multiple participants;
obtaining, by the first client computing device, a set of mesh data (304) corresponding to a virtual representation of a face of a participant in the collaborative program, wherein the mesh data includes labelled key points that constitute specific features of the face of the participant;
generating, by one or more processors of the first client computing device, a hull (314) of a user mask (318), the hull delineating a perimeter of the user mask in accordance with the set of mesh data, wherein generating the hull includes performing a hull concavity operation to delineate the perimeter of the user mask;
generating by the one or more processors, a set of facial features (316) in accordance with the set of mesh data, wherein the facial features are generated by drawing lines and polygons between mesh points;
assembling, by the one or more processors, the user mask by combining the hull and the set of facial features; and
incorporating the user mask into a graphical interface of the collaborative program.

2. The method of claim 1, wherein:
the participant is a second user associated with a second client computing device (102b); and
obtaining the set of mesh data comprises receiving the set of mesh data corresponding to the virtual representation of the face of the second user from the second client computing device.

3. The method of claim 1 or 2, wherein generating the hull and generating the set of facial features are performed in parallel.

4. The method of any one of claims 1, 2 or 3, wherein the method further comprises updating the user mask based on a newer set of mesh data.

5. The method of any one of claims 1-4, wherein the method further comprises performing pre-processing on the set of obtained mesh data based on a user interaction with the collaborative program.

6. The method of claim 5, wherein the pre-processing includes rotating point coordinates of the set of mesh data.

7. The method of claim 5 or 6, wherein rotating the point coordinates causes the user mask to change orientation to indicate where the participant's focus is.

8. The method of any one of claims 1-7, wherein the user mask illustrates at least one of a facial expression or positioning of the participant's head; and/or
wherein the participant is the first user, and the method further comprises generating the set of mesh data from a frame captured by a camera (104a) associated with the first client computing device.

9. The method of any one of claims 1-8, further comprising changing at least one of a resolution or a detail of the user mask based on a detected motion of the participant; and/or
further comprising changing at least one of a resolution or a detail of the user mask based on available bandwidth for a communication connection associated with the collaborative program; and/or
further comprising changing at least one of a resolution or a detail of the user mask based on computer processing usage associated with the one or more processors of the first client computing device.

10. The method of any one of claims 1-9, wherein upon determining that there is connectivity issue associated with the collaborative program, the method further includes locally updating the user mask without using a newer set of mesh data; and optionally,
wherein the connectivity issue is a loss of connection that exceeds a threshold amount of time.

11. A computing device, comprising:
memory configured to store data associated with a collaborative program; and
one or more processors operatively coupled to the memory, the one or more processors being configured to:
access the collaborative program, the collaborative program being configured to support multiple participants;
obtain a set of mesh data (304) corresponding to a virtual representation of a face of a participant in the collaborative program, wherein the mesh data includes labelled key points that constitute specific features of the face of the participant;
generate a hull (314) of a user mask (318), the hull delineating a perimeter of the user mask in accordance with the set of mesh data, wherein generating the hull includes performing a hull concavity operation to delineate the perimeter of the user mask;
generate a set of facial features (316) in accordance with the set of mesh data, wherein the facial features are generated by drawing lines and polygons between mesh points;
assemble the user mask by combining the hull and the set of facial features; and
incorporate the user mask into a graphical interface of the collaborative program.

12. The computing device of claim 11, wherein the one or more processors are further configured to update the user mask based on a newer set of mesh data.

13. The computing device of claim 11 or 12, wherein the one or more processors are further configured to pre-process the set of obtained mesh data based on a user interaction with the collaborative program; and/or
wherein the user mask illustrates at least one of a facial expression or positioning of the participant's head.

14. The computing device of any one of claims 11-13, wherein:
the computing device further includes at least one camera;
the participant is a user of the computing device; and
the one or more processors are further configured to generate the set of mesh data from a frame captured by the one or more cameras associated.

15. The computing device of any one of claims 11-14, wherein the one or more processors are further configured to:
change at least one of a resolution or a detail of the user mask based on a detected motion of the participant;
change at least one of the resolution or the detail of the user mask based on available bandwidth for a communication connection associated with the collaborative program; or
change at least one of the resolution or the detail of the user mask based on computer processing usage associated with the one or more processors.

## Patentansprüche

1. Verfahren, umfassend:
Zugreifen, über eine erste Client-Rechenvorrichtung (102a), die einem ersten Benutzer zugeordnet ist, auf ein Kollaborationsprogramm, das konfiguriert ist, mehrere Teilnehmer zu unterstützen;
Erlangen, durch die erste Client-Rechenvorrichtung, eines Satzes von Mesh-Daten (304), die einer virtuellen Darstellung eines Gesichts eines Teilnehmers in dem Kollaborationsprogramm entsprechen, wobei die Mesh-Daten markierte Schlüsselpunkte beinhalten, die spezifische Merkmale des Gesichts des Teilnehmers darstellen;
Erzeugen, durch einen oder mehrere Prozessoren der ersten Client-Rechenvorrichtung, einer Hülle (314) einer Benutzermaske (318), wobei die Hülle einen Umfang der Benutzermaske in Übereinstimmung mit dem Satz von Mesh-Daten abgrenzt, wobei das Erzeugen der Hülle das Durchführen einer Hüllenkonkavitätsoperation zum Abgrenzen des Umfangs der Benutzermaske beinhaltet;
Erzeugen, durch den einen oder die mehreren Prozessoren, eines Satzes von Gesichtsmerkmalen (316) in Übereinstimmung mit dem Satz von Mesh-Daten, wobei die Gesichtsmerkmale durch Zeichnen von Linien und Polygonen zwischen Mesh-Punkten erzeugt werden;
Zusammensetzen, durch den einen oder die mehreren Prozessoren, der Benutzermaske durch Kombinieren der Hülle und des Satzes von Gesichtsmerkmalen; und
Einbinden der Benutzermaske in eine grafische Schnittstelle des Kollaborationsprogramms.

2. Verfahren nach Anspruch 1, wobei:
der Teilnehmer ein zweiter Benutzer ist, der einer zweiten Client-Rechenvorrichtung (102b) zugeordnet ist; und
das Erlangen des Satzes von Mesh-Daten das Empfangen des Satzes von Mesh-Daten, die der virtuellen Darstellung des Gesichts des zweiten Benutzers entsprechen, von der zweiten Client-Rechenvorrichtung umfasst.

3. Verfahren nach Anspruch 1 oder 2, wobei das Erzeugen der Hülle und das Erzeugen des Satzes von Gesichtsmerkmalen parallel durchgeführt werden.

4. Verfahren nach einem der Ansprüche 1, 2 oder 3, wobei das Verfahren ferner das Aktualisieren der Benutzermaske basierend auf einem neueren Satz von Mesh-Daten umfasst.

5. Verfahren nach einem der Ansprüche 1 bis 4, wobei das Verfahren ferner das Durchführen einer Vorverarbeitung an dem Satz von erlangten Mesh-Daten basierend auf einer Benutzerinteraktion mit dem Kollaborationsprogramm umfasst.

6. Verfahren nach Anspruch 5, wobei die Vorverarbeitung das Rotieren von Punktkoordinaten des Satzes von Mesh-Daten beinhaltet.

7. Verfahren nach Anspruch 5 oder 6, wobei das Rotieren der Punktkoordinaten bewirkt, dass die Benutzermaske die Ausrichtung ändert, um anzuzeigen, wo der Fokus des Teilnehmers liegt.

8. Verfahren nach einem der Ansprüche 1 bis 7, wobei die Benutzermaske mindestens einen Gesichtsausdruck oder eine Positionierung des Kopfes des Teilnehmers veranschaulicht; und/oder
wobei der Teilnehmer der erste Benutzer ist und das Verfahren ferner das Erzeugen des Satzes von Mesh-Daten aus einem Bildframe umfasst, der von einer Kamera (104a) erfasst wird, die der ersten Client-Rechenvorrichtung zugeordnet ist.

9. Verfahren nach einem der Ansprüche 1 bis 8, ferner umfassend das Ändern mindestens einer Auflösung oder eines Detailgrads der Benutzermaske basierend auf einer erkannten Bewegung des Teilnehmers; und/oder
ferner umfassend das Ändern mindestens einer Auflösung oder eines Detailgrads der Benutzermaske basierend auf verfügbarer Bandbreite für eine Kommunikationsverbindung, die dem Kollaborationsprogramm zugeordnet ist; und/oder
ferner umfassend das Ändern mindestens einer Auflösung oder eines Detailgrads der Benutzermaske basierend auf einer Computerverarbeitungsauslastung, die dem einen oder den mehreren Prozessoren der ersten Client-Rechenvorrichtung zugeordnet ist.

10. Verfahren nach einem der Ansprüche 1 bis 9, wobei bei Bestimmung, dass ein Verbindungsproblem vorliegt, das dem Kollaborationsprogramm zugeordnet ist, das Verfahren ferner das lokale Aktualisieren der Benutzermaske ohne Verwendung eines neueren Satzes von Mesh-Daten beinhaltet; und optional,
wobei das Verbindungsproblem ein Verbindungsverlust ist, der eine Schwellenzeitdauer überschreitet.

11. Rechenvorrichtung, umfassend:
Speicher, der konfiguriert ist, Daten zu speichern, die einem Kollaborationsprogramm zugeordnet sind; und
einen oder mehrere Prozessoren, die operativ mit dem Speicher gekoppelt sind, wobei der eine oder die mehreren Prozessoren konfiguriert sind zum:
Zugreifen auf das Kollaborationsprogramm, wobei das Kollaborationsprogramm konfiguriert ist, mehrere Teilnehmer zu unterstützen;
Erlangen eines Satzes von Mesh-Daten (304), die einer virtuellen Darstellung eines Gesichts eines Teilnehmers in dem Kollaborationsprogramm entsprechen, wobei die Mesh-Daten markierte Schlüsselpunkte beinhalten, die spezifische Merkmale des Gesichts des Teilnehmers darstellen;
Erzeugen einer Hülle (314) einer Benutzermaske (318), wobei die Hülle einen Umfang der Benutzermaske in Übereinstimmung mit dem Satz von Mesh-Daten abgrenzt, wobei das Erzeugen der Hülle das Durchführen einer Hüllenkonkavitätsoperation zum Abgrenzen des Umfangs der Benutzermaske beinhaltet;
Erzeugen eines Satzes von Gesichtsmerkmalen (316) in Übereinstimmung mit dem Satz von Mesh-Daten, wobei die Gesichtsmerkmale durch Zeichnen von Linien und Polygonen zwischen Mesh-Punkten erzeugt werden;
Zusammensetzen der Benutzermaske durch Kombinieren der Hülle und des Satzes von Gesichtsmerkmalen; und
Einbinden der Benutzermaske in eine grafische Schnittstelle des Kollaborationsprogramms.

12. Rechenvorrichtung nach Anspruch 11, wobei der eine oder die mehreren Prozessoren ferner konfiguriert sind zum Aktualisieren der Benutzermaske basierend auf einem neueren Satz von Mesh-Daten.

13. Rechenvorrichtung nach Anspruch 11 oder 12, wobei der eine oder die mehreren Prozessoren ferner konfiguriert sind zum Vorverarbeiten des Satzes von erlangten Mesh-Daten basierend auf einer Benutzerinteraktion mit dem Kollaborationsprogramm; und/oder
wobei die Benutzermaske mindestens einen Gesichtsausdruck oder eine Positionierung des Kopfes des Teilnehmers veranschaulicht.

14. Rechenvorrichtung nach einem der Ansprüche 11 bis 13, wobei:
die Rechenvorrichtung ferner mindestens eine Kamera beinhaltet;
der Teilnehmer ein Benutzer der Rechenvorrichtung ist; und
der eine oder die mehreren Prozessoren ferner konfiguriert sind zum Erzeugen des Satzes von Mesh-Daten aus einem Bildframe, der von der einen oder den mehreren zugeordneten Kameras erfasst wird.

15. Rechenvorrichtung nach einem der Ansprüche 11 bis 14, wobei der eine oder die mehreren Prozessoren ferner konfiguriert sind zum:
Ändern mindestens einer Auflösung oder eines Detailgrads der Benutzermaske basierend auf einer erkannten Bewegung des Teilnehmers;
Ändern mindestens der Auflösung oder des Detailgrads der Benutzermaske basierend auf verfügbarer Bandbreite für eine Kommunikationsverbindung, die dem Kollaborationsprogramm zugeordnet ist; oder
Ändern mindestens der Auflösung oder des Detailgrads der Benutzermaske basierend auf einer Computerverarbeitungsauslastung, die dem einen oder den mehreren Prozessoren zugeordnet ist.

## Revendications

1. Procédé, comprenant :
l'accès, via un premier dispositif informatique client (102a) associé à un premier utilisateur, à un programme collaboratif configuré pour prendre en charge de multiples participants ;
l'obtention, par le premier dispositif informatique client, d'un ensemble de données de maillage (304) correspondant à une représentation virtuelle du visage d'un participant au programme collaboratif, dans lequel les données de maillage comportent des points clés étiquetés qui constituent des caractéristiques spécifiques du visage du participant ;
la génération, par un ou plusieurs processeurs du premier dispositif informatique client, d'une enveloppe (314) d'un masque utilisateur (318), l'enveloppe délimitant un périmètre du masque utilisateur conformément à l'ensemble de données de maillage, dans lequel la génération de l'enveloppe comporte la réalisation d'une opération de concavité d'enveloppe pour délimiter le périmètre du masque utilisateur ;
la génération, par les un ou plusieurs processeurs, d'un ensemble de caractéristiques faciales (316) conformément à l'ensemble de données de maillage, dans lequel les caractéristiques faciales sont générées en dessinant des lignes et des polygones entre des points de maillage ;
l'assemblage, par les un ou plusieurs processeurs, du masque utilisateur en combinant l'enveloppe et l'ensemble de caractéristiques faciales ; et
l'incorporation du masque utilisateur dans une interface graphique du programme collaboratif.

2. Procédé selon la revendication 1, dans lequel :
le participant est un second utilisateur associé à un second dispositif informatique client (102b) ; et
l'obtention de l'ensemble de données de maillage comprend la réception de l'ensemble de données de maillage correspondant à la représentation virtuelle du visage du second utilisateur à partir du second dispositif informatique client.

3. Procédé selon la revendication 1 ou 2, dans lequel la génération de l'enveloppe et la génération de l'ensemble de caractéristiques faciales sont réalisées en parallèle.

4. Procédé selon l'une quelconque des revendications 1, 2 ou 3, dans lequel le procédé comprend également la mise à jour du masque utilisateur sur la base d'un ensemble plus récent de données de maillage.

5. Procédé selon l'une quelconque des revendications 1 à 4, dans lequel le procédé comprend également la réalisation d'un prétraitement sur l'ensemble de données de maillage obtenues sur la base d'une interaction de l'utilisateur avec le programme collaboratif.

6. Procédé selon la revendication 5, dans lequel le prétraitement comporte la rotation de coordonnées de points de l'ensemble de données de maillage.

7. Procédé selon la revendication 5 ou 6, dans lequel la rotation des coordonnées de point entraîne un changement d'orientation du masque utilisateur pour indiquer où se trouve le centre de l'attention du participant.

8. Procédé selon l'une quelconque des revendications 1 à 7, dans lequel le masque utilisateur illustre au moins l'un d'une expression faciale ou du positionnement de la tête du participant ; et/ou
dans lequel le participant est le premier utilisateur, et le procédé comprend également la génération de l'ensemble de données de maillage à partir d'une image capturée par une caméra (104a) associée au premier dispositif informatique client.

9. Procédé selon l'une quelconque des revendications 1 à 8, comprenant également la modification d'au moins l'un d'une résolution ou d'un détail du masque utilisateur sur la base d'un mouvement détecté du participant ; et/ou
comprenant également la modification d'au moins l'un d'une résolution ou d'un détail du masque utilisateur sur la base de la bande passante disponible pour une connexion de communication associée au programme collaboratif ; et/ou
comprenant également la modification d'au moins l'un d'une résolution ou d'un détail du masque utilisateur sur la base de l'utilisation du traitement informatique associée aux un ou plusieurs processeurs du premier dispositif informatique client.

10. Procédé selon l'une quelconque des revendications 1 à 9, dans lequel, lorsqu'il est déterminé qu'il existe un problème de connectivité associé au programme collaboratif, le procédé comporte également la mise à jour locale du masque utilisateur sans utiliser un ensemble plus récent de données de maillage ; et, éventuellement,
dans lequel le problème de connectivité est une perte de connexion qui dépasse une durée seuil.

11. Dispositif informatique, comprenant :
une mémoire configurée pour stocker des données associées à un programme collaboratif ; et
un ou plusieurs processeurs couplés fonctionnellement à la mémoire, les un ou plusieurs processeurs étant configurés pour :
accéder au programme collaboratif, le programme collaboratif étant configuré pour prendre en charge de multiples participants ;
obtenir un ensemble de données de maillage (304) correspondant à une représentation virtuelle du visage d'un participant au programme collaboratif, dans lequel les données de maillage comportent des points clés étiquetés qui constituent des caractéristiques spécifiques du visage du participant ;
générer une enveloppe (314) d'un masque utilisateur (318), l'enveloppe délimitant un périmètre du masque utilisateur conformément à l'ensemble de données de maillage, dans lequel la génération de l'enveloppe comporte la réalisation d'une opération de concavité d'enveloppe pour délimiter le périmètre du masque utilisateur ;
générer un ensemble de caractéristiques faciales (316) conformément à l'ensemble de données de maillage, dans lequel les caractéristiques faciales sont générées en dessinant des lignes et des polygones entre des points de maillage ;
assembler le masque utilisateur en combinant l'enveloppe et l'ensemble de caractéristiques faciales ; et
incorporer le masque utilisateur dans une interface graphique du programme collaboratif.

12. Dispositif informatique selon la revendication 11, dans lequel les un ou plusieurs processeurs sont également configurés pour mettre à jour le masque utilisateur sur la base d'un ensemble plus récent de données de maillage.

13. Dispositif informatique selon la revendication 11 ou 12, dans lequel les un ou plusieurs processeurs sont également configurés pour prétraiter l'ensemble de données de maillage obtenues sur la base d'une interaction de l'utilisateur avec le programme collaboratif ; et/ou
dans lequel le masque utilisateur illustre au moins l'un d'une expression faciale ou du positionnement de la tête du participant.

14. Dispositif informatique selon l'une quelconque des revendications 11 à 13, dans lequel :
le dispositif informatique comporte également au moins une caméra ;
le participant est un utilisateur du dispositif informatique ;
et
les un ou plusieurs processeurs sont également configurés pour générer l'ensemble de données de maillage à partir d'une image capturée par les une ou plusieurs caméras associées.

15. Dispositif informatique selon l'une quelconque des revendications 11 à 14, dans lequel les un ou plusieurs processeurs sont également configurés pour :
modifier au moins l'un d'une résolution ou d'un détail du masque utilisateur sur la base d'un mouvement détecté du participant ;
modifier au moins l'un de la résolution ou du détail du masque utilisateur sur la base de la bande passante disponible pour une connexion de communication associée au programme collaboratif ;
ou
modifier au moins l'un de la résolution ou du détail du masque utilisateur sur la base de l'utilisation du traitement informatique associée aux un ou plusieurs processeurs.
